# EUROPÄISCHE PATENTSCHRIFT

(11) **EP 0 648 641 B1**
(45) Veröffentlichungstag und Bekanntmachung des Hinweises auf die Patenterteilung: **21.05.1997**
(21) Anmeldenummer: 94111285.6
(22) Anmeldetag: 20.07.1994
(51) Int. Cl.: B60N 2/10, B60N 2/38, B60N 2/30, A47C 7/56, B66C 13/54

(54) **Kippkonsole sowie Fahrersitz**
Tiltable bracket and driver seat
Console rabattable et siège de conducteur

(30) Priorität: 14.10.1993 DE 9315676 U
(43) Veröffentlichungstag der Anmeldung: 19.04.1995
(73) Patentinhaber: Fuchs, Peter, D-90518 Altdorf (DE)
(72) Erfinder: Fuchs, Peter, D-90518 Altdorf (DE)
(74) Vertreter: Hafner, Dieter, Dr.rer.nat., Dipl.-Phys.

(56) Entgegenhaltungen:
- DE-C- 923 829
- DE-U- 9 315 676
- FR-A- 537 843
- GB-A- 2 141 326
- US-A- 3 131 964
- US-A- 4 636 001
- PATENT ABSTRACTS OF JAPAN vol. 8, no. 240 (M-336) (1677) 6. November 1984 & JP-A-59 120 533 (MAZDA K.K.) 12. Juli 1984

## Beschreibung

Die Erfindung betrifft eine Kippkonsole zum Einbau von Einrichtungen, insbesondere von Fahrersitzen oder dergleichen bei beengten Platzverhältnissen, gemäß dem Oberbegriff des Anspruchs 1 (S. zum Beispiel GB-A-2 141 326), sowie einen Sitz, der eine solche Kippkonsole aufweist.

Nach dem Stand der Technik besteht insbesondere bei Arbeitsplätzen mit beengten Platzverhältnissen, wie z.B. Führersitzen von Ladekränen, die Problematik, daß diese nur von hinten, also von der Rückseite des Sitzes her, betreten werden können. Häufig sind in diesem Zusammenhang die Platzverhältnisse derart beengt, daß der Arbeitsplatz nur dann erreicht bzw. verlassen werden kann, wenn zuvor der Sitz bzw. das Sitzoberteil umgeklappt wurde. Zum Umklappen ist der Sitz bzw. das Sitzoberteil auf eine Konsole montiert, welche üblicherweise mittels eines Scharniers außermittig gelagert ist, so daß die Konsole um die Scharnierachse schwenkbar ist.

Nachdem die zur Verfügung stehende Einbaubreite im oben beschriebenen Fall häufig weniger als 500 mm beträgt, mußten schwenkbar ausgestaltete Sitze bzw. Sitzflächen und Rückenlehnen möglichst schmal und flach gehalten werden, was den Komfort derartiger Arbeitsplätze nachteilig beeinflußt. Insbesondere ist es aufgrund der oben dargestellten Problematik bislang nicht möglich, Fahrersitze zu verwenden, die modernen Anforderungen, wie einer ausreichenden Polsterung, einer Seitenführung, einer Rückenlehnenverstellung und dem Vorsehen einer Bandscheibenstütze entsprechen, da diese zu einer Vergrößerung der Ausmaße des Fahrersitzes führen. Gerade diese Vergrößerung der Ausmaße, insbesondere der Einbaubreite würde beim Kippen um herkömmliche Konsolen zu einem seitlichen Anschlag führen und so den Kippvorgang unmöglich machen.

Aufgabe der vorliegenden Erfindung ist es, eine Kippvorrichtung anzugeben, mit der die beschriebenen Nachteile ausgeräumt werden.

Diese Aufgabe wird durch die kennzeichnenden Merkmale der unabhängigen Ansprüche gelöst, wobei zweckmäßige Weiterbildungen der Erfindung durch die in den abhängigen Ansprüchen gekennzeichneten Merkmale wiedergegeben sind.

Nach Maßgabe der Erfindung ist eine Kippkonsole vorgesehen, mittels welcher die an der Oberseite vorgesehene Einrichtung, z.B. ein Fahrersitz, besonders platzsparend kippbar ist. Hierdurch wird der Vorteil geschaffen, daß nunmehr auch Einrichtungen z.B. Fahrersitze mit einer relativ großen Einbaubreite selbst bei beengten Platzverhältnissen sicher und zuverlässig schwenkbar sind.

Die seitliche Versetzbewegung kann über das Getriebe derart festgelegt sein, daß zu keinem Zeitpunkt der Kippbewegung eine Einbaubreite (b) des Fahrersitzes überschritten wird.

Zweckmäßigerweise läßt sich das Getriebe durch ein Verbindungsteil, insbesondere Lenkhebel realisieren, welcher sowohl an der Stütze als auch am Fahrersitz drehbar befestigt ist und die Kipp- sowie Versetzbewegung von Fahrersitz zu Stütze über eine Kulissensteuerung erfolgt. Stütze und Fahrersitz stehen damit über das Verbindungsteil sowie die Kulissensteuerung mittelbar miteinander in Verbindung.

Die Kulissensteuerung kann zweckmäßigerweise durch eine Steuerkurve sowie einen darin befindlichen Steuerzapfen gebildet werden, wobei die Steuerkurve mit dem Fahrersitz und der Steuerzapfen mit der Stütze oder umgekehrt in Verbindung stehen.

Die Steuerkurve ist hierbei insbesondere auf die Kippbewegung abgestimmt, die unter anderem durch den Abstand der Befestigungspunkte jedes Lenkhebels festgelegt ist.

Zweckmäßigerweise kann bei der vorstehenden Ausgestaltung die überlagerte Versetzbewegung durch eine Steuerkurve realisiert werden, die einen bogenförmigen Schlitz aufweist.

Vorteilhafterweise weist die Steuerkurve ein zweites Anschlagsende auf, welches so angeordnet ist, daß die Einrichtung im gekippten Zustand selbständig hält. Zweckmäßigerweise ist das zweite Ende so angeordnet, daß die Achse des Steuerzapfens im anliegenden, d.h. im maximal gekippten Zustand neben einer gedachten Verbindungslinie durch die Schwenkachsen der Befestigungspunkte des Lenkhebels liegt.

Die Kippkonsole läßt sich besonders einfach handhaben, wenn die Steuerkurve einseitig der einem Griff, d.h. Betätigungsgriff zugeordneten Seite des Fahrersitzes angeordnet ist.

Gemäß einer weiteren vorteilhaften Ausgestaltung der Erfindung kann eine Arretierung der zu kippenden Einrichtung im horizontalen Zustand vorgesehen sein. In diesem Zusammenhang ist es selbstverständlich auch denkbar, lösbare Arretierungsmechanismen vorzusehen, welche eine Arretierung in jedem anderen Kippzustand ermöglichen.

In vorteilhafter Weise dient als Befestigungsplatte für Bestandteile des Getriebes eine Kippplatte, die an ihrer Oberseite die Einrichtung, z.B. den Fahrersitz trägt. An deren Unterseite kann die Steuerkurve befestigt sein.

Zweckmäßigerweise ist der Fahrersitz 7 auf der Kippplatte verschiebbar aufgenommen.

Um während des Kippens den Platzbedarf zu reduzieren, weist der Fahrersitz eine vorzugsweise einklappbare Rückenlehne auf.

Eine weitere Lösung der Erfindung besteht darin, einen Fahrersitz mit der oben besprochenen Kippkonsole zu kombinieren. Ferner kann die erfindungsgemäße Kippkonsole in diesem Zusammenhang zusätzlich mit einer Luftfederung kombiniert werden.

Eine bevorzugte Ausführungsform der vorliegenden Erfindung wird anhand der beigefügten Zeichnungen beispielsweise näher erläutert. Es zeigen:
- Fig. 1: eine schematische Frontansicht einer Kippkonsole zum Einbau von Fahrersitzen, wobei sich der Fahrersitz in horizontaler Position befindet, und
- Fig. 2: eine schematische Frontansicht nach Fig. 1, wobei der Fahrersitz in eine vertikale Position gekippt ist.

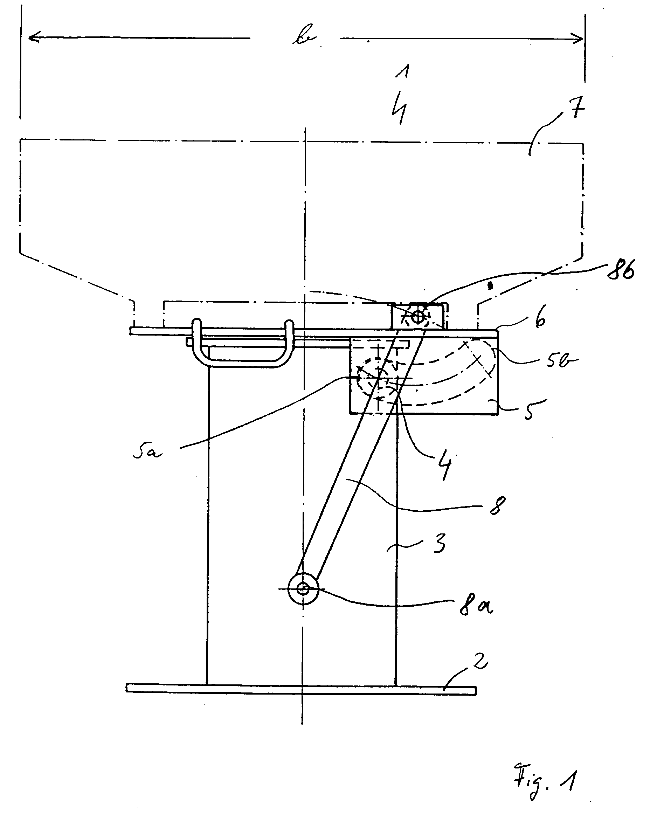

Die in Fig. 1 allgemein mit dem Bezugszeichen 1 bezeichnete Kippkonsole umfaßt eine auf einer Grundplatte 2 montierte Stütze 3, an der ein in Blickrichtung hervorstehender Steuerzapfen 4 vorgesehen ist. Der Steuerzapfen 4 greift in eine Steuerkurve 5 ein, welche in Form eines bogenförmig gekrümmten Schlitzes in einem Blech gebildet ist, das sich nach unten von einer Kippplatte 6 erstreckt.

Auf der Kippplatte 6 ist eine kipp- bzw. schwenkbare Einrichtung aufgenommen. Im vorliegenden Fall handelt es sich hierbei um einen verschiebbaren Fahrersitz 7 mit Rückenlehne, wobei die Rückenlehne einklappbar, d.h. in Blickrichtung umlegbar ist. Ferner sind zwischen der Stütze 3 und der Kippplatte 6 beiderseits der Stütze 3 je ein Lenkhebel 8 vorgesehen, von denen hier nur der vordere sichtbar ist. Diese sind sowohl an der Stütze 3 um eine Achse 8a, als auch an der kippbaren Einrichtung über eine Achse 8b schwenkbar befestigt.

An der Oberseite der Stütze 3 befindet sich eine Lagerplatte 9, die in betriebsbereiter Position der Kippkonsole gemäß Fig. 1 in unmittelbarem Kontakt zur Kippplatte 6 steht. Der Fahrersitz 7 ist an der Kippplatte 6 verschiebbar angeordnet.

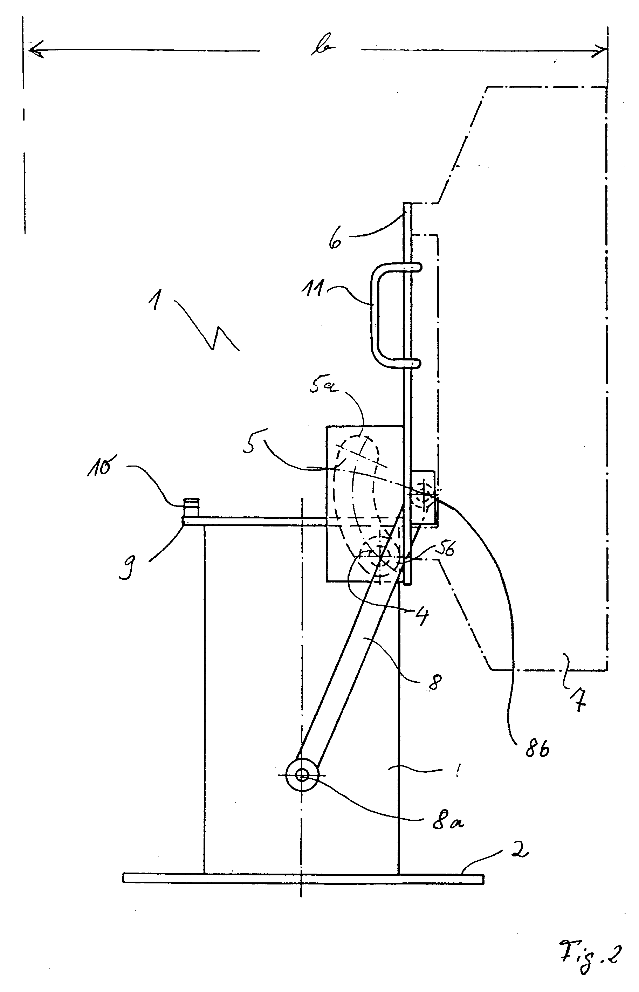

Fig. 2 zeigt eine Kippkonsole nach Fig. 1, wobei der Fahrersitz 7 in eine im wesentlichen vertikale Position gekippt ist. Deutlich erkennbar liegt der Zapfen 4 in dieser Stellung an einem zweiten Ende 5b der Steuerkurve 5 an. Die Lagerplatte 9 trägt einen Verriegelungshaken 10, der zur Verriegelung der Kippplatte 6 in einer horizontalen Position dient. Eine Entriegelung kann beispielsweise durch Betätigung eines hierfür vorgesehenen Griffes 11 erfolgen.

Um ein Verschwenken der Einrichtung 7 aus der Horizontalen zu bewirken, wird zunächst die Arretierung durch Betätigung des Griffes 11 gelöst. Sodann kann die Einrichtung in die Vertikale gekippt werden. Während des Kippvorganges wird der Fahrersitz über die Steuerkurve 5 und den ortsfesten Steuerzapfen 4 von einem ersten Ende 5a zu einem zweiten Ende 5b geführt, wobei beim Anschlag an das zweite Ende 5b der Kippvorgang begrenzt wird. Ein selbsttätiger Halt im gekippten Zustand wird durch die Mitwirkung des Lenkhebels 8 erzielt. Aufgrund der um den Radius des Lenkhebels 8 schwenkbar gehaltenen Schwenkachse des zweiten Befestigungspunkts 8b, deren Bewegung mit der Bewegung der Steuerkurve 5 entlang dem Steuerzapfen 4 zusammenwirkt, ist ein Kippen der Einrichtung 7 von der horizontalen in die vertikale Position um einen sehr engen Radius möglich, so daß eine Einbaubreite b der Einrichtung 7 zu keiner Zeit des Kippvorgangs überschritten wird.

## Patentansprüche

1. Kippkonsole zum Kippen von Einrichtungen, insbesondere Fahrersitzen (7) oder dergleichen bei beengten Platzverhältnissen, mit einer Stütze (3) sowie einem Verschwenkmechanismus von Fahrersitz (7) zu Stütze (3), wobei die Stütze (3) und der Fahrersitz (7) mittelbar über ein Getriebe in Verbindung stehen, welches der Kippbewegung des Fahrersitzes (7) eine seitliche Versetzbewegung desselben zur Stütze (3) überlagert, wobei das Getriebe ein Verbindungsteil (8) umfaßt, welches sowohl an der Stütze (3) als auch am Fahrersitz (7) drehbar befestigt ist,
**dadurch gekennzeichnet,**
daß die Kipp- sowie Versetzbewegung von Fahrersitz (7) zu Stütze (3) über eine Kulissensteuerung erfolgt, die von einer Steuerkurve (5) und einem Steuerzapfen (4) gebildet wird, wobei die Steuerkurve (5) in einem Blech gebildet ist, das sich nach unten von einer Kippplatte (6) erstreckt.

2. Kippkonsole nach Anspruch 1,
**dadurch gekennzeichnet,**
daß die seitliche Versetzbewegung derart festgelegt ist, daß zu keinem Zeitpunkt der Kippbewegung eine Einbaubreite (b) des Fahrersitzes überschritten wird.

3. Kippkonsole nach Anspruch 1 oder 2,
**dadurch gekennzeichnet,**
daß das Getriebe mindestens ein Verbindungsteil (8), insbesondere Lenkhebel (8) umfaßt.

4. Kippkonsole nach einem der vorhergehenden Ansprüche,
**dadurch gekennzeichnet,**
daß die Steuerkurve (5) der Kulissensteuerung sowie einen darin befindlichen Steuerzapfen (4) aufweist, wobei die Steuerkurve (5) mit dem Fahrersitz (7) und der Steuerzapfen (4) mit der Stütze (3) in Verbindung stehen.

5. Kippkonsole nach Anspruch 4,
**dadurch gekennzeichnet,**
daß die Steuerkurve (5) vorzugsweise senkrecht zur Kippkonsole angeordnet ist und einen bogenförmigen Schlitz aufweist, welcher die überlagerte Versetzbewegung festlegt.

6. Kippkonsole nach einem der vorhergehenden Ansprüche,
**dadurch gekennzeichnet,**
daß die Steuerkurve (5) einseitig der einem Griff (11) zugeordneten Seite des Fahrersitzes (7) angeordnet ist.

7. Kippkonsole nach Anspruch 6,
**dadurch gekennzeichnet,**
daß beidseitig der Stütze (3) zwei Lenkhebel (8) vorgesehen sind, wobei ein Lenkhebel mit der Steuerkurve zusammenwirkt.

8. Kippkonsole nach Anspruch 7,
**dadurch gekennzeichnet,**
daß der/die Lenkhebel (8) an einem ersten Befestigungspunkt (8a) um eine stützenseitig vorgesehene Achse sowie an einem zweiten Befestigungspunkt (8b) um eine am Fahrersitz (7) vorgesehene Achse schwenkbar ist.

9. Kippkonsole nach einem der vorhergehenden Ansprüche,
**dadurch gekennzeichnet,**
daß eine an der Oberseite der Stütze (3) aufliegende Kippplatte (6) vorgesehen ist, die den Fahrersitz (7) trägt und daß an der Kippplatte (6) vorzugsweise senkrecht nach unten die Steuerkurve (5) angeordnet ist.

10. Kippkonsole nach Anspruch 9,
**dadurch gekennzeichnet,**
daß zwischen Kippplatte (6) und Oberseite der Stütze (3) eine Verriegelungseinrichtung zur Arretierung der Sitzposition des Fahrersitzes (7) vorgesehen ist.

11. Kippkonsole nach Anspruch 10,
**dadurch gekennzeichnet,**
daß als Verriegelungseinrichtung ein Verriegelungshaken (10) ausgebildet ist, der sich an der Oberseite einer Lagerplatte (9) am oberen Ende der Stütze (3) befindet.

12. Kippkonsole nach Anspruch 10 oder 11,
**dadurch gekennzeichnet,**
daß die Arretierung der Verriegelungseinrichtung bzw. des Verriegelungshakens (10) durch Bewegung des an der Kippplatte (69) angeordneten Griffs (11) lösbar ist.

13. Kippkonsole nach einem der vorhergehenden Ansprüche,
**dadurch gekennzeichnet,**
daß der Fahrersitz (7) verschiebbar auf der Kippplatte (6) aufgenommen ist.

14. Kippkonsole nach einem der vorhergehenden Ansprüche,
**dadurch gekennzeichnet,**
daß der Fahrersitz (7) eine vorzugsweise einklappbare Rückenlehne aufweist.

15. Kippkonsole nach einem der vorhergehenden Ansprüche,
**dadurch gekennzeichnet,**
daß die Einbaubreite des Fahrersitzes (7) zwischen 400 mm bis 600 mm liegt.

16. Fest installierter Sitz, insbesondere Fahrersitz,
**dadurch gekennzeichnet,**
daß er eine Kippkonsole (1) gemäß einem der vorhergehenden Ansprüche aufweist.

## Claims

1. Tilting bracket for the tilting of devices, in particular driver's seats (7), or the like, in the case of restricted space conditions, having a support (3) and a mechanism for pivoting the driver's seat (7) with respect to the support (3), wherein the support (3) and the driver's seat (7) are in indirect connection via a mechanism, which superimposes on the tilting movement of the driver's seat (7) a lateral displacement movement of the latter with respect to the support (3), wherein the mechanism comprises a connection part (8) which is rotatably secured both on the support (3) and on the driver's seat (7), characterised in that the tilting and displacement movement of the driver's seat (7) with respect to the support (3) is performed via a link mechanism which is formed of a control cam (5) and a control pin (4) wherein the control cam (5) is formed in a plate, which extends downwards from a tilting plate (6).

2. Tilting bracket according to Claim 1, characterised in that the lateral displacement movement is established in such a manner that an installation width (b) of the driver's seat is not exceeded at any time during the tilting movement.

3. Tilting bracket according to Claim 1 or Claim 2, characterised in that the mechanism comprises at least one connection part (8), in particular articulation levers (8).

4. Tilting bracket according to one of the preceding Claims, characterised in that the control cam (5) of the link mechanism comprises a control pin (4) located therein, wherein the control cam (5) is in connection with the driver's seat (7) and the control pins are in connection with the support (3).

5. Tilting bracket according to Claim 4, characterised in that the control cam (5) is preferably disposed perpendicular to the tilting bracket and comprises an arcuate slot, which establishes the superimposed displacement movement.

6. Tilting bracket according to one of the preceding Claims, characterised in that the control cam (5) is disposed on one side, on the side of the driver's seat (7) to which a handle (11) has been provided.

7. Tilting bracket according to Claim 6, characterised in that two articulation levers (8) are disposed on either side of the support (3), wherein an articulation lever cooperates with the control cam.

8. Tilting bracket according to Claim 7, characterised in that the articulation lever(s) (8) is/are pivotable at a first securing point (8a) about a shaft which is provided on the support side and at a second securing point about a shaft which is provided on the driver's seat (7).

9. Tilting bracket according to one of the preceding Claims, characterised in that a tilting plate (6) is provided on the upper side of the support (3) which tilting plate bears the driver's seat (7) and in that the control cam (5) is disposed on the tilting plate (6), preferably perpendicular towards the bottom.

10. Tilting bracket according to Claim 9, characterised in that there is disposed, between the tilting plate (6) and the upper side of the support (3) a locking device for retaining the seat position of the driver's seat (7).

11. Tilting bracket according to Claim 10, characterised in that a locking hook (10) is formed as the locking device, which hook is located at the upper side of a bearing plate (9) at the upper end of the support (3).

12. Tilting bracket according to Claim 10 or 11, characterised in that the retainer of the locking device or locking hook (10) can be detached by moving the handle (11) which is disposed on the tilting plate (69).

13. Tilting bracket according to one of the preceding Claims, characterised in that the driver's seat (7) is accommodated in a displaceable manner on the tilting plate (6).

14. Tilting bracket according to one of the preceding Claims, characterised in that the driver's seat (7) comprises a back rest which is preferably hinged.

15. Tilting bracket according to one of the preceding Claims, characterised in that the installation width of the driver's seat (7) is between 400 mm and 600 mm.

16. Seat installed in a rigid manner, in particular a driver's seat, characterised in that it comprises one tilting bracket (1) according to one of the preceding Claims.

## Revendications

1. Console basculante pour faire basculer des dispositifs, notamment des sièges de conducteur (7) ou analogues, dans des conditions d'encombrement restreint, avec un support (3) ainsi qu'un mécanisme de pivotement du siège de conducteur (7) au support (3), le support (3) et le siège de conducteur (7) étant indirectement reliés par l'intermédiaire d'une transmission qui superpose au mouvement de basculement du siège de conducteur (7) un mouvement de décalage latéral du siège par rapport au support (3), la transmission comprenant un élément de liaison (8) qui est fixé à rotation tant sur le support (3) que sur le siège de conducteur (7), **caractérisée** en ce que le mouvement de basculement et de décalage du siège de conducteur (7) par rapport au support (3) s'effectue au moyen d'une commande à coulisse qui est formée par une came de commande (5) et un tenon de commande (4), la came de commande (5) étant formée par une tôle qui s'étend vers le bas à partir d'un plateau basculant (6).

2. Console basculante selon la revendication 1, **caractérisée** en ce que le mouvement de décalage latéral est défini de telle sorte qu'une largeur de montage (b) du siège de conducteur n'est dépassée à aucun moment du mouvement de basculement.

3. Console basculante selon la revendication 1 ou 2, **caractérisée** en ce que la transmission comprend au moins un élément de liaison (8), notamment un levier de commande (8).

4. Console basculante selon une des revendications précédentes, **caractérisée** en ce que la commande à coulisse présente une came de commande (5) ainsi qu'un tenon de commande (4) positionné dans cette came, la came de commande (5) étant reliée au siège de conducteur (7) et le tenon de commande (4) au support (3).

5. Console basculante selon la revendication 4, **caractérisée** en ce que la came de commande (5) est de préférence disposée perpendiculairement à la console basculante, et elle présente une fente en forme d'arc qui définit le mouvement superposé de décalage.

6. Console basculante selon une des revendications précédentes, **caractérisée** en ce que la came de commande (5) est disposée sur le côté du siège de conducteur (7) où se trouve une poignée (11).

7. Console basculante selon la revendication 6, **caractérisée** en ce que deux leviers de commande (8) sont prévus de part et d'autre du support (3), un lever de commande coopérant avec la came de commande.

8. Console basculante selon la revendication 7, **caractérisée** en ce que le ou les leviers de commande (8) sont montés à pivotement autour d'un axe prévu sur le support en un premier point de fixation (8a), et à pivotement autour d'un axe prévu sur le siège de conducteur (7) en un second point de fixation (8b).

9. Console basculante selon une des revendications précédentes, **caractérisée** en ce qu'est prévu un plateau basculant (6) reposant sur le dessus du support (3), plateau qui porte le siège de conducteur (7), et en ce que la came de commande (5) est de préférence fixée au plateau basculant (6) perpendiculairement vers le bas.

10. Console basculante selon la revendication 9, **caractérisée** en ce qu'un dispositif de verrouillage est prévu entre le plateau basculant (6) et le dessus du support (3) afin de bloquer la position assise du siège de conducteur (7).

11. Console basculante selon la revendication 10, **caractérisée** en ce qu'un crochet de verrouillage (10) est prévu comme dispositif de verrouillage, crochet qui se trouve sur le dessus d'une plaque de montage (9) à l'extrémité supérieure du support (3).

12. Console basculante selon la revendication 10 ou 11, **caractérisée** en ce que le blocage du dispositif de verrouillage ou encore du crochet de verrouillage (10) peut être libéré en déplaçant la poignée (11) disposée sur le plateau basculant (6).

13. Console basculante selon une des revendications précédentes, **caractérisée** en ce que le siège de conducteur (7) est reçu à coulissement sur le plateau basculant (6).

14. Console basculante selon une des revendications précédentes, **caractérisée** en ce que le siège de conducteur (7) présente un dossier de préférence rabattable.

15. Console basculante selon une des revendications précédentes, **caractérisée** en ce que la largeur de montage du siège de conducteur (7) est comprise entre 400 mm et 600 mm.

16. Siège installé fixement, notamment siège de conducteur, **caractérisé** en ce qu'il présente une console basculante (1) selon une des revendications précédentes.
